# EUROPÄISCHE PATENTSCHRIFT

(11) **EP 3 064 453 B1**
(45) Veröffentlichungstag und Bekanntmachung des Hinweises auf die Patenterteilung: **28.03.2018**
(21) Anmeldenummer: 16153864.0
(22) Anmeldetag: 02.02.2016
(51) Int. Cl.: B65H 39/10, B65H 29/00, B65H 39/075

(54) **VERFAHREN UND VORRICHTUNG ZUM ERSTELLEN VON PAKETEN AUS DRUCKEREIERZEUGNISSEN**
METHOD AND DEVICE FOR THE PRODUCTION OF PACKAGES OF PRINTED PRODUCTS
PROCÉDÉ ET DISPOSITIF DE FABRICATION DE PAQUETS A PARTIR DE PRODUITS D'IMPRIMERIE

(30) Priorität: 02.03.2015 CH 3262015
(43) Veröffentlichungstag der Anmeldung: 07.09.2016
(73) Patentinhaber: Ferag AG, 8340 Hinwil (CH)
(72) Erfinder: KELLER, Alex, 8646 Wagen (CH)
(74) Vertreter: Rentsch Partner AG

(56) Entgegenhaltungen:
- WO-A1-2013/159238
- DE-A1- 2 822 060

## Beschreibung

Die Erfindung betrifft Verfahren zum Betrieb einer Druckweiterverarbeitungsanlage zum Herstellen und Verarbeiten von Druckprodukten, insbesondere zum Bilden von Stapeln oder Paketen aus Produkteinheiten die vorzugsweise aus einem Mantelprodukt und einer Mehrzahl oder Kollektion von Teilprodukten und/oder Beilagen zusammengestellt sind. Die vorliegende Erfindung betrifft zudem Druckweiterverarbeitungsanlagen zum Herstellen und Verarbeiten von Druckprodukten. An die Druckweiterverarbeitung werden mit zunehmender Regionalisierung und/oder Personalisierung des redaktionellen Inhalts der Produkte, aber insbesondere der Werbebeilagen immer höhere Anforderungen gestellt. Einerseits müssen zur Steigerung der Rentabilität die Verarbeitungskapazitäten gesteigert werden, andererseits müssen auch individualisierte Produkte in korrekter Sequenz zu Paketen für die Verteilrouten fehlerlos mit möglichst geringem manuellem Aufwand zusammengestellt und versandfertig gemacht werden können.

Im stark umkämpften Werbemarkt werden an die Anbieter von Printwerbung und damit an die Druckweiterverarbeitung immer höhere Ansprüche gestellt und immer weniger Fehler toleriert. Um die Werbebudgets möglichst rentabel einsetzen zu können, verlangen Werbekunden in zunehmendem Mass, dass Printwerbung also primär Druckprodukte, aber auch Produktmuster und Datenträger, Kunden- oder Adressatspezifisch zugestellt wird. Je teurer das einzelne Werbemedium ist, desto höher ist der Druck den Adressatenkreis spezifisch bestimmen zu können.

Für die Druckweiterverarbeitung heisst dies, dass individualisierte, also adressatspezifisch zusammengestellte Druckprodukte für eine bestimmte Verteilroute fehlerfrei und zudem in der korrekten Produktesequenz hergestellt und zu Paketen verarbeitet werden müssen.

Da Werbekunden nur noch sehr niedrige Fehlerraten (im niedrigen Promillebereich) akzeptieren, müssen Fehler bei der Zusammenstellung der Produkte vermieden oder aufwändig und kostspielig von Hand korrigiert werden.

Aus dem Stand der Technik sind verschiedene Verfahren bekannt, um sicherzustellen, dass die Produkte in der korrekten Reihenfolge oder Sequenz zusammengestellt werden um den manuellen Reparaturaufwand möglichst gering zu halten.

So wird zum Beispiel in der WO 2013/159238 ein Verfahren und eine Vorrichtung zum Erstellen eines Produktstroms aus einer Mehrzahl von Produkteinheiten in einer vorgegebenen Sequenz vorgeschlagen, mittels welchem fehlerhafte Produkteinheiten einer Sequenz ohne Produktionsunterbruch sowie unter Einhaltung der vorgegebenen Sequenz korrigiert werden können. Bei diesem Verfahren zum Erstellen eines getakteten Produktstroms von Produkteinheiten in einer vorgegebenen Sequenz werden in einem ersten Schritt Produkte zur Gruppierungsstrecke einer ersten Fördereinrichtung zugeführt, dann wird ein getakteter Produktstroms von Produkteinheiten aus den zugeführten Produkten entlang der Gruppierungsstrecke in einer vorgegebenen Sequenz erstellt und die Produkteinheiten werden in der vorgegebenen Sequenz an eine Wegfördereinrichtung übergeben und in einem getakteten Produktstrom weggefördert.

Kommt es beim Erstellen der Produkteinheiten zu Fehlern, so können diese nachträglich dadurch korrigiert werden, dass an einer Ausschleusstation eine oder mehrere fehlerhafte Produkteinheiten ausgeschleust werden. Durch das Ausschleussen entsteht eine Lücke im getakteten Strom der Produkteinheiten die in Abhängigkeit der Anzahl fehlerhafter ausgeschleusster Produkteinheiten eine Länge von einem oder mehreren Takten hat. Für jede fehlerhafte Produkteinheit wird anschliessend eine neue erstellt. Insbesondere wird aber vorgeschlagen, dass beim Fehlen lediglich einzelner Produkte in der Produkteinheit die unvollständigen Produkteinheit der Gruppierungsstrecke wieder zugeführt und vervollständigt werden. Die fehlenden oder fehlerhaften Produkte oder Produkteinheiten werden nachträglich in der Gruppierungsstrecke korrekt erstellt und anschliessend der Wegfördereinrichtung übergeben. Um diese Produkteinheit zur Wiederherstellung der vorgegebenen Produktsequenz an die korrekte Position innerhalb dieser Sequenz nachträglich einzufügen ist in der WO 2013/159238 eine Überbrückungseinrichtung vorgesehen, die es erlaubt unter Überbrückung eines Förderstreckenabschnittes der Wegfördereinrichtung zeitlich nachfolgend der Produktlücke zuzuführen. Auf diese Weise wird die vorgegebene Sequenz von Produkteinheiten aus der Wegfördereinrichtung in einer vollständig sortierten Abfolge für weitere Verarbeitungsprozesse bereit gestellt.

Die von der Überbrückungseinheit überbrückte Länge der Wegfördereinrichtung muss mindestens eine Länge aufweisend, die es erlaubt eine Anzahl von Produkteinheiten aufzunehmen die mindestens so gross ist wie die Anzahl der Produkte zwischen einer Lücke und der nachproduzierten oder korrigierten Produkteinheit. Die Produkte werden getaktet und gleichmässig beabstandet voneinander in der Wegfördereinrichtung transportiert. Sind am oberen Trum der Gruppierungsstrecke zum Beispiel 40 Fördereinrichtungen zum Zuführen von Produkten angeordnet, so hat sie eine Mindestlänge von 40 Takten. Da die Produktkollektionen nach Durchlaufen des oberen Trums gehalten und entlang dem unteren Trum zu einer Abgabestelle zur Übergabe an die Wegfördereinrichtung transportiert werden, erhöht sich die Länge auf mindestens 80 Takte, das heisst die überbrückte Länge der Wegförderstrecke muss mindestens 80 Takte lang sein um die gesamte Anzahl an Produkteinheiten zwischen der Lücke und der korrigierten oder nachproduzierten Produkteinheit aufnehmen zu können. In der Praxis wird die Strecke bereits bei geringerer Anzahl von Zuführeinheiten an der Gruppierungsstrecke wesentlich höher sein.

Eine Haupt-Fehlerquelle bei der Herstellung von Produkteinheiten, vorzugsweise Druckendprodukten wie Kollektionen von Haupt- und/oderTeilprodukten, Beilagen, Prospekten, Karten und ähnlichem, liegt bei der Bereitstellung der vorgenannten Produkte. So kommt es zum Beispiel bei Prospekten mit schlechter Papierqualität häufig zu Fehlern in der Zuführvorrichtung, die dazu führen, dass diese Produkte nicht korrekt den zu erstellenden Kollektionen oder Produkteinheiten zugegeben werden können. Dasselbe Problem stellt sich aber auch bei sehr hochwertigen Produkten mit Beschichtungen oder Produkten aus glattem Folienmaterial, das einerseits schwierig zu greifen ist und andererseits oft elektrostatisch aufgeladen aneinander haftet.

Die DE2822060 beschreibt eine Einrichtung zum individuellen Fördern von in einem Schuppenstrom anfallenden Druckprodukten, mit einer Anzahl von in einer in sich geschlossenen Bahn geführten und umlaufend angetriebenen gesteuerten Greifern zum Fassen des vorlaufenden Randes der Druckprodukte, wobei im Greiferantrieb Mittel zum vorübergehenden Aufhalten der Greifer vorgesehen sind. Der Greiferantrieb weist mindestens eine kontinuierlich angetriebene Schleuse zum getakteten Abrufen der aufgehaltenen Greifer auf, wobei der Schleuse ein endloses, in regelmässigen Abständen mit an der Nachlaufkante der Produkte angreifenden Mitnehmern bestücktes umlaufendes Förderorgan zugeordnet ist, welches hinsichtlich der Mitnehmer im Schleusentakt und in Bezuq auf den Umlaufsinn der Greifer gegensinnig angetrieben ist und wobei ein Zuförderer vorgesehen ist, dessen Antrieb mit demjenigen der Schleuse durch eine Synchronsteuerung gekoppelt ist.

Da die Druckweiterverarbeiter einem steigenden Qualitätsdruck ausgesetzt sind, besteht weiterhin ein Bedürfnis die Fehlerraten bei der Herstellung routengerecht paketierter Produkteströme weiter zu reduzieren und gleichzeitig die vorhandenen Anlagekapazitäten, insbesondere auch die der Stapeleinrichtungen optimal auszunutzen.

Es ist daher eine Aufgabe der vorliegenden Erfindung, ein Verfahren und eine Vorrichtung zum Erstellen eines paketierten Produktestroms aus einer Mehrzahl von Produkteinheiten in einer vorgegebenen Sequenz zur Verfügung zu stellen, bei dem korrekte routengerecht paketierte Produkteinheiten in einer vorgegebenen Sequenz mit einer sehr tiefen Fehlerrate herstellbar sind. Wobei das Beheben von Fehlern bei der Erstellung der Produkteinheiten ermöglicht wird ohne dass die Gesamtleistung oder die Verarbeitungsgeschwindigkeit der Druckweiterverarbeitungsanlage wesentlich reduziert werden muss.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung gemäss einer ersten Ausführungsform insbesondere dadurch erreicht, dass ein Verfahren zum Betrieb einer Druckweiterverarbeitungsanlage zum Herstellen und Verarbeiten von Produkteinheiten, insbesondere von Druckendprodukten mit Druckprodukt-Kollektionen umfassend eine Mehrzahl von Produkten, ausgewählt aus der Gruppe von Mantelprodukten und einer Mehrzahl von Teilprodukten und/oder Beilagen, zu routengerechten Stapeln oder Paketen, wobei zumindest ein Anteil der Druckendprodukte adressat-spezifisch individualisierte Produkteinheiten sind, zur Verfügung gestellt wird.

Das Verfahren umfasst folgende Schritte:
i) Sammeln von Druckprodukt-Kollektionen aus einer Mehrzahl von Druckprodukten in Aufnahmeeinheiten entlang einer Sammelstrecke, wobei die Druckprodukte von Zuführvorrichtungen mit jeweils einem Bereitstellungsförderer, einem Bereitschaftsrundlauf mit einer Mehrzahl von Transporteinheiten und einem Abgabeförderer den Aufnahmeeinheiten gesteuert zugeführt werden. Dabei wird jeweils ein Druckprodukt an einer Abgabestelle des Bereitstellungsförderers an eine Transporteinheit des Bereitschaftsrundlaufs übergeben, von dieser zum Abgabeföderer transportiert und an diesen abgegeben. Anschliessend werden die Produkte vom Abgabeförderer an die jeweils vorgesehenen Aufnahmeeinheiten der Sammelstrecke abgegeben; und
ii) Übergabe der Druckendprodukte und der Transport an die mindestens eine Stapelvorrichtung zum Herstellen von Stapeln oder Paketen, die gemäss einer Produktsequenz Sᵢₛₜ erfolgen, die Dank des Einsatzes des Bereitschaftsrundlaufs und der Kontrolleinheit mit hoher Sicherheit der Produktionssequenz Sₛₒₗₗ entspricht.

Gemäss bevorzugter Ausführungsformen des Verfahrens zum Betrieb einer Druckweiterverarbeitungsanlage geben die Abgabeförderer die Druckprodukte gesteuert an den vorgesehenen Aufnahmeeinheiten der Sammelstrecke ab. Das heisst, der Abgabeförderer fördert nur dann ein Produkt in eine ankommende Aufnahmeeinheit, wenn ein solches Produkt für die Kollektion in dieser Aufnahmeeinheit vorgesehen ist. Ist dies nicht der Fall, werden keine Produkte abgegeben.

Gemäss weiteren bevorzugten Ausführungsformen gibt der Bereitschaftsrundlauf die Druckprodukte gesteuert an den Abgabeföderer ab. Das heisst, die Produkte werden so lange im Bereitschaftsrundlauf gehalten, bis ein Produkt vom bereitgehaltenen Typ für eine Kollektion in einer Aufnahmeeinheit benötigt wird. Bei der Steuerung der Abgabe gilt es die Länge des Abgabeförderers zu Beachten, um sicherzustellen, dass das benötigte Produkt mit ausreichend Vorlauf an den Abgabeförderer abgegeben wird, so dass es anschliessend rechtzeitig von diesem an die korrekte Aufnahmeeinheit abgegeben werden kann. Vorzugsweise werden die Abgabeförderer kontinuierlich betrieben.

Gemäss einer weiteren Ausführungsform kontrolliert eine Kontrolleinheit, dass die Transporteinheiten des Bereitschaftsrundlaufs die Abgabestelle nur verlassen, wenn sie ein Druckprodukt übernommen haben. Eine leere Transporteinheit, d.h. eine Transporteinheiten ohne Produkt, erreicht vorzugsweise die Abgabestelle gleichzeitig mit einem vom Bereitstellungsförderer zur Abgabestelle geförderten Druckprodukt, wird an einer vorlaufenden Kante vom Haltemittel der Transporteinheit, vorzugsweise einer Greiferklammer, ergriffen und abtransportiert. Falls kein Produkt vorhanden ist, wird die Transporteinheit solange an der Abgabestelle zurückgehalten, bis ein Druckprodukt zur Übernahme bereitgestellt ist. Die im Folgenden noch genaure erläuterte Entkopplung der Transporteinheiten untereinander erlaubt dies.

Die Kontrolle, ob ein Produkt zur Übernahme von einer Transporteinheit bereitgestellt ist oder sein wird, kann vorzugsweise optisch erfolgen. Sie kann vorzugsweise direkt an der Abgabestelle, oder stromaufwärts im Abgabeförderer erfolgen.

Eine Kontrolle, ob eine Transporteinheit zur Übernahme des bereitgestellten Druckprodukts vorhanden ist oder sein wird, kann ebenfalls an der Abgabestelle oder bereits stromaufwärts im Bereitschaftsrundlauf erfolgen.

Mit einer Druckweiterverarbeitungsanlage zum Herstellen und Verarbeiten von Pro-dukteinheiten gemäss dem vorgängig beschriebenen Verfahren, können aus Produkteinheiten, insbesondere aus Druckendprodukten mit Produktkollektionen umfassend eine Mehrzahl von Produkten, ausgewählt aus der Gruppe von Mantelprodukten und einer Mehrzahl von Teilprodukten und/oder Beilagen, in mindestens einer Stapelvorrichtung routengerechte Stapeln oder Paketen hergestellt werden. Dabei sind zumindest ein Anteil der Druckendprodukte adressat-spezifisch individualisierte Produkteinheiten. Die Druckweiterverarbeitungsanlage umfasst eine Sammelstrecke, mit einer Mehrzahl von Zuführvorrichtungen und einen Sammelrundlauf mit einer Mehrzahl von Aufnahmeeinheiten. Zumindest eine Zuführvorrichtung umfasst einen Bereitstellungsförderer, einen Bereitschaftsrundlauf mit einer Mehrzahl von Transporteinheiten und einen Abgabeförderer. Die Zuführvorrichtungen der Druckweiterverarbeitungsanlage sind derart ausgebildet, dass sie die abzugebenden Produkteinheiten gesteuert an die gemäss Produktionsplan vorgesehene Aufnahmeeinheit des Sammelrundlaufs abgeben. Dazu kann der Abgabeförderer der Zuführvorrichtung derart ausgebildet sein, dass er die Produkte an die vorgesehene Aufnahmeeinheiten der Sammelstrecke gesteuert, also bei Bedarf abgibt.

Gemäss bevorzugten Ausführungsformen ist der Bereitschaftsrundlauf derart ausgebildet, dass er die Druckprodukte gesteuert an den Abgabeföderer abgeben kann.

Vorzugsweise umfasst die Druckweiterverarbeitungsanlage eine Kontrolleinheit, die kontrolliert, dass die Transporteinheiten des Bereitschaftsrundlaufs die Abgabestelle nur verlassen, wenn sie ein Produkt übernommen haben. Steht kein Produkt zur Übernahme durch eine Transporteinheit bereit, so sind Rückhaltemittel vorgesehen, die die Transporteinheit an der Abgabestelle zurückhalten, und erst freigeben, sobald das Druckprodukt vorliegt.

Gemäss einer bevorzugten Ausführungsform sind die Transporteinheiten des Bereitschaftsrundlaufs als Greifer zum Greifen und lösbaren Halten der Produkte ausgebildet.

Vorzugsweise sind die Transporteinheiten auf dem Bereitschaftsrundlauf unabhängig voneinander und im Abstand zueinander veränderlich förderbar angeordnet sind.

Gemäss einer weiteren Ausführungsform sind die Transporteinheiten als in einer Laufschiene frei bewegliche Laufwagen mit Greifern ausgebildet.

Ein weiteres Verfahren zum Betrieb einer Druckweiterverarbeitungsanlage zum Herstellen und Verarbeiten von Produkteinheiten, insbesondere von Druckendprodukten mit Druckprodukt-Kollektionen umfassend eine Mehrzahl von Produkten, ausgewählt aus der Gruppe von Mantelprodukten und einer Mehrzahl von Teilprodukten und/oder Beilagen, zu routengerechten Stapeln oder Paketen, wobei zumindest ein Anteil der Druckendprodukte adressat-spezifisch individualisierte Produkteinheiten sind, umfasst folgende Schritte:
i) das Sammeln von Produktkollektionen aus einer Mehrzahl von Druckprodukten in Aufnahmeeinheiten einer Sammelstrecke, wobei Druckprodukte von Zuführvorrichtungen den Aufnahmeeinheiten zugeführt werden
ii) Fertigstellen der Produkteinheiten umfassend die Produktkollektionen
iii) Übergabe der Produkteinheiten gemäss einer Produktesequenz an eine Rangiervorrichtung
iv) Vergleich der tatsächlichen Sequenz der einzelnen Produkteinheiten der Produktesequenz (Sᵢₛₜ) mit der geplanten Sequenz von Produkteinheiten gemäss einer Produktionssequenz (Sₛₒₗₗ)
v-a) Transport der Prokukteinheiten ohne Änderung der Sequenz durch die Rangiervorrichtung bei Übereinstimmung der Produktesequenz (Sᵢₛₜ) mit der Produktionssequenz (Sₛₒₗₗ), oder
v-b) Zwischenspeichern einer Reparaturgruppe umfassend eine Mehrzahl von Produkteinheiten mit von der Produktionssequenz (Sₛₒₗₗ) abweichender Sequenz in einer Bereitstellungsstrecke einer Richtungsgruppe und nachfolgendem sequenzrichtigem Zusammenführen von korrigierten und/oder nachproduzierten Produkteinheiten mit den Produkteinheiten der Reparaturgruppe und
vi) Transport der sequenzrichtigen Prokukteinheiten an mindestens eine Stapelvorrichtung zum Herstellen routengerechter Pakete.

Solange beim Herstellen der Produkteinheiten keine Fehler geschehen und die Produktesequenz (Sᵢₛₜ) mit der Produktionssequenz (Sₛₒₗₗ) übereinstimmt können die angelieferten Produkteinheiten ohne Änderung in ihrer Sequenz durch die Rangiervorrichtung durchgeführt werden. Dies erfolgt vorzugsweise auf einer dafür ausgewählten Durchführstrecke.

Baulich muss sich diese Durchführstrecke nicht von den Bereitstellungsstrecken unterscheiden und bei Bedarf kann diese auch als Bereitstellungsstrecke dienen. Ebenso kann eine Bereitstellungsstrecke als Durchführstrecke dienen.

Eine Druckweiterverarbeitungsanlage zum Herstellen und Verarbeiten von Pro-dukteinheiten, insbesondere von Druckendprodukten mit Druckprodukt-Kollektionen umfassend eine Mehrzahl von Produkten, ausgewählt aus der Gruppe von Mantelprodukten und einer Mehrzahl von Teilprodukten und/oder Beilagen, in mindestens einer Stapelvorrichtung zu routengerechten Stapeln oder Paketen, wobei zumindest ein Anteil der Druckendprodukte adressat-spezifisch individualisierte Produkteinheiten sind, umfasst eine Sammelstrecke, mit einer Mehrzahl von Zuführvorrichtungen und einem Sammelrundlauf mit einer Vielzahl von Aufnahmeeinheiten zum Herstellen von Druckproduktkollektionen, mindestens einen Zwischenförderer zum Transportieren der Druckproduktkollektionen von der Sammelstrecke zur mindestens einen Stapeleinrichtung, wobei der Zwischenförderer eine Vielzahl von Transporteinheiten zum Greifen und lösbaren Halten der Produkte und eine Rangiervorrichtung umfasst.

Vorzugsweise umfasst die Rangiervorrichtung mindestens eine Richtungsgruppe mit mindestens einer Weiche, eine Durchführstrecke und mindestens eine Bereitstellungsstrecke.

Vorzugsweise ist mindestens eine der Mehrzahl von Zuführvorrichtungen eine Zuführvorrichtung mit einem Bereitstellungsförderer, einem Bereitschaftsrundlauf mit einer Mehrzahl von Transporteinheiten und einem Abgabeförderer, wie sie vorgängig beschrieben wurden.

Die Länge der Bereitstellungsstrecke ist vorzugsweise so gewählt, dass eine Mehrzahl von Produkteinheiten, respektive eine Mehrzahl von Produkteinheiten tragenden Transporteinheiten in der Bereitstellungsstrecke zwischengespeichert werden können.

Es hat sich als vorteilhaft erwiesen, wenn die Länge der Bereitstellungsstrecke das Zwischenspeichern einer Anzahl von Produkteinheiten zulässt, die gemäss Produktionsplan zu mindestens einem Paket gehören. Gemäss weiterer bevorzugter Ausführungsformen lässt die Länge der Bereitstellungsstrecke das Zwischenspeichern einer Anzahl von Produkteinheiten zu, die gemäss Produktionsplan zu mehr als einem Paket gehören. Kommt es bei der Herstellung der Produkteinheiten zu einem Fehler, so können alle korrekt produzierten Produkteinheiten in der Bereitstellungsstrecke zwischengespeichert werden, solange bis die fehlerhafte korrigiert oder eine korrekte Produkteinheit nachproduziert ist. Diese korrigierte oder nachproduzierte Produkteinheit wird zur Rangiervorrichtung transportiert und dort mit den wartenden Produkteinheiten zur korrekten Sequenz für ein Paket vereinigt.

Dazu wird die korrigierte oder nachproduzierte Produkteinheit zusammen mit weiteren Produkteinheiten in Abweichung von der Produktionssequenz (Sₛₒₗₗ) zur Rangiervorrichtung transportiert. Um sicherzustellen, dass jeweils die korrekten Produkteinheiten für ein in der Stapeleinrichtung herzustellendes Paket in der richtigen Sequenz der Stapeleinheit zugeführt werden können, wird in diesem Fall das die korrigierte oder nachproduzierte Produkteinheit mittels der mindestens einen Weiche von den übrigen Produkteinheiten getrennt vorzugsweise auf die Durchführungsstrecke geführt. Die übrigen Produkteinheiten, die zusammen ein Paket in korrekter Sequenz bilden, werden vorzugsweise auf eine weitere Bereitstellungsstrecke geführt.

Mittels einer Einschleussweiche werden die in der korrekten Sequenz vor der korrigierten oder nachproduzierten Produkteinheit liegenden Produkteinheiten von der Bereitstellungsstrecke auf die Durchführungsstrecke geschleusst. Die korrigierte oder nachproduzierte Produkteinheit kann dabei vor der Einschleussweiche abgebremst und/oder zurückgehalten werden.

Anschliessend wird die Weiche so geschaltet, dass die korrigierte oder nachproduzierte Produkteinheit sequenzrichtig an die vorlaufenden Produkteineiten geführt werden kann und letztlich werden die übrigen, in der korrekten Paketsequenz nachfolgenden, Produkteinheiten nach nochmaligem Umschalten der Weiche aus der Bereitstellungsstrecke hinter der korrigierten oder nachproduzierten Produkteinheit zugeführt und die nun in korrekter Sequenz vorliegende Gruppe von Produkteinheiten für ein Paket kann weitergefördert werden zur Stapeleinheit.

Besonders bevorzugt sind die Transporteinheiten des Zwischenförderers unabhängig voneinander und im Abstand zueinander veränderlich förderbar angeordnet und zum Beispiel als in einer Laufschiene frei bewegliche Laufwagen mit Greifern ausgebildet.

Gemäss einer weiteren Ausführungsform ist mittels einer oder mehrerer Weichen ein Laufwagen in der Richtungsgruppe auf jeweils eine aus einer Mehrzahl von Bereitstellungsstrecken einspeicherbar.

Bevorzugt ist ein Laufwagen in der Richtungsgruppe aktiv oder passiv aus der jeweils einen von einer Mehrzahl von Bereitstellungsstrecken ausspeicherbar und mittels einer oder mehrerer Weichen mit weiteren Laufwagen aus der selben und/oder weiteren Bereitstellungsstrecken zu einer vorgegebenen Sequenz zusammenstellbar, wobei diese mit der Produktionssequenz übereinstimmt.

In einer weiteren Ausführungsform erfolgt die Individualisierung der herzustellenden Produkteinheiten nicht oder nicht nur durch individuelles, d.h. adressatspezifischen Zusammenstellen der Produktkollektionen, sondern es wird ein eine Produkteinheit in Form eines individualisierten Druckendprodukts derart hergestellt, dass dieses ein individuell für den Adressaten hergestelltes (vorzugsweise im Digitaldruck) Druckprodukt umfasst.

Dieses individuell hergestellte Druckprodukt kann ein Beilage in der Produktkollektion und/oder ein Mantelprodukt oder ein Umschlag sein, welche die Druckproduktkollektion ummantelt oder welcher die Druckproduktkollektion umschliesst.

Das Mantelprodukt kann ein personalisiertes Druckprodukt sein, das vorzugsweise ausgewählt ist aus der Gruppe: gefalzter Druckbogen, Haupt- oder ein Teilprodukt, Umschlag, die vorzugsweise jeweils adressatspezifisch personalisiert sind.

Gemäss weiterer Ausführungsformen werden die Druckpeodukt-Kollektionen anstelle der Ummantelung oder zusätzlich zu dieser mit einem Klebeelement lösbar verbunden.

In einer Ausführungsform wird ein personalisiertes Druckendprodukt derart hergestellt, dass das personalisierte Druckendprodukt eine Druckproduktkollektion und ein individuell hergestelltes Druckprodukt aufweist, welche miteinander verklebt sind. Die Druckproduktkollektion und das personalisierte Druckprodukt sind miteinander insbesondere lösbar verklebt, wobei die Verklebung derart ausgebildet ist, dass sie sich lösen lässt ohne die Produkte zu beschädigen.

Eine Produktionsvorrichtung zum Herstellen von solchen individualisierten Druckendprodukten umfasst vorzugsweise eine Steuerzentrale, die für die folgenden Schritte eingerichtet ist: Erstellen von Endprodukt-Spezifikationen, welche jeweils mindestens ein individualisiertes Druckendprodukt definieren, Erstellen von Vertriebs-Aufträgen auf der Basis von Endprodukt-Spezifikationen, wobei ein Vertriebs-Auftrag mindestens eine Sequenz von Druckproduktkollektionen definiert, und Auslösen des Erstellens und Erstellen von Digitaldruck-Aufträgen auf der Basis von Endprodukt-Spezifikationen und Vertriebs-Aufträgen, wobei ein Digitaldruck-Auftrag mindestens ein individualisiertes Druckprodukt definiert. Die Steuerzentrale ist ferner für die Steuerung folgender Herstellungsschritte eingerichtet ist: Herstellen, unter Benutzung der Sammelstrecke und den Zuführvorrichtungen, von Druckproduktkollektionen entsprechend den Vertriebs-Aufträgen, Herstellen, unter Benutzung einer Digitaldruckmaschine, von individualisierten Druckprodukten entsprechend den Digitaldruck-Aufträgen, und Herstellen, unter Benutzung der Sammelstrecke und/oder der Ummantelungsvorrichtung und/oder einer Einsteckvorrichtung, von individualisierten Druckendprodukten aus den hergestellten Druckproduktkollektionen und individualisierten Druckprodukten.

### KURZE ERLÄUTERUNG DER FIGUREN

Die Erfindung soll nachfolgend anhand von Ausführungsbeispielen im Zusammenhang mit den Zeichnung näher erläutert werden. Es zeigen:

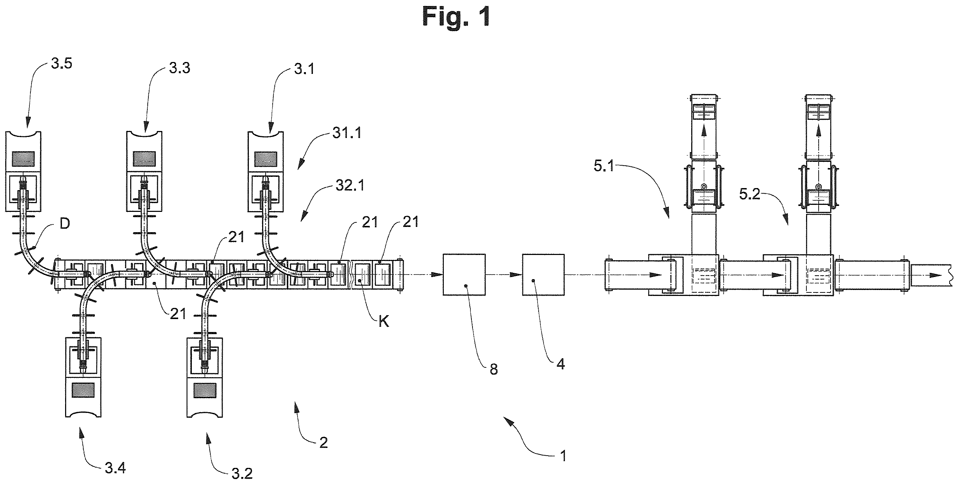

- Fig. 1: in einer schematischen Draufsicht ein erstes Ausführungsbeispiel einer Druckweiterverarbeitungsanlage gemäss der Erfindung mit einer Sammelstrecke mit fünf Zuführvorrichtungen mit jeweils einem Bereitschaftsrundlauf und einem Sammelförderer, einer Ummantelungsstation, einem Zwischenförderer, zwei Stapeleinrichtungen und einer Abgabeeinrichtung;

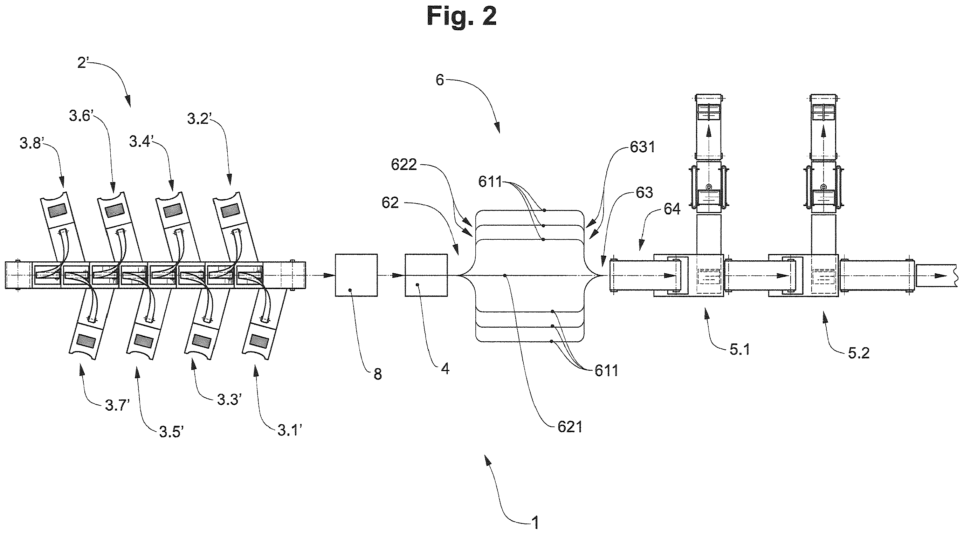

- Fig. 2: in einer schematischen Draufsicht ein zweites Ausführungsbeispiel einer Druckweiterverarbeitungsanlage gemäss der Erfindung mit einer Sammelstrecke mit acht Zuführvorrichtungen, einem Sammelförderer, einer Ummantelungsstation, einem Zwischenförderer mit einer Rangiervorrichtung, umfassend sechs Bereitstellungsstrecken in einer Richtungsgruppe, zwei Stapeleinrichtungen und einer Abgabeeinrichtung;

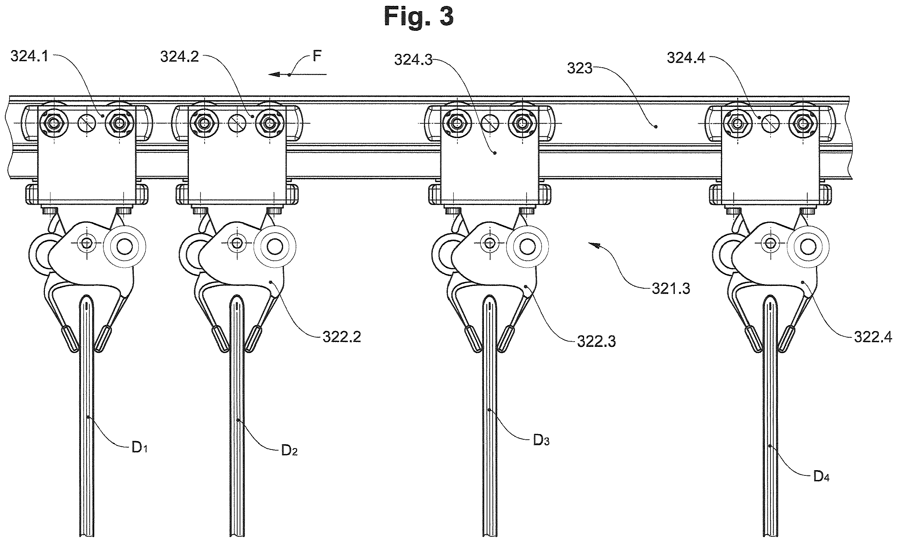

- Fig. 3: eine schematische Seitenansicht auf einen Abschnitt eines Bereitschaftsrundlaufs gemäss Fig. 1 mit einem Abschnitt einer Laufschiene auf der vier frei bewegliche Transporteinheiten in Form von Laufwagen mit Greifern einen ersten Typ von Druckprodukten hängend transportieren;

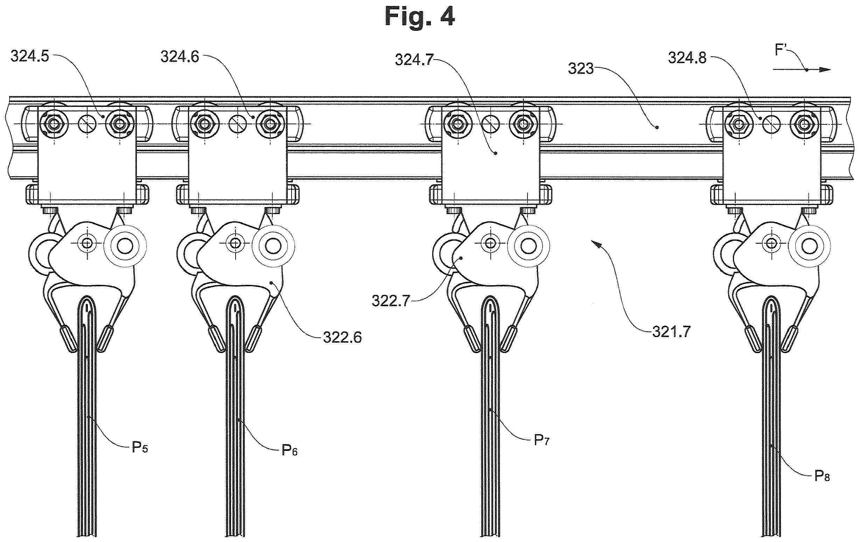

- Fig. 4: eine schematische Seitenansicht auf einen Abschnitt einer Bereitstellungsstrecke einer Richtungsgruppe einer Rangiervorrichtung gemäss Fig. 2 mit einem Abschnitt einer Laufschiene auf der vier frei bewegliche Transporteinheiten in Form von Laufwagen mit Greifern einen ersten Typ von Druckendprodukten transportieren;

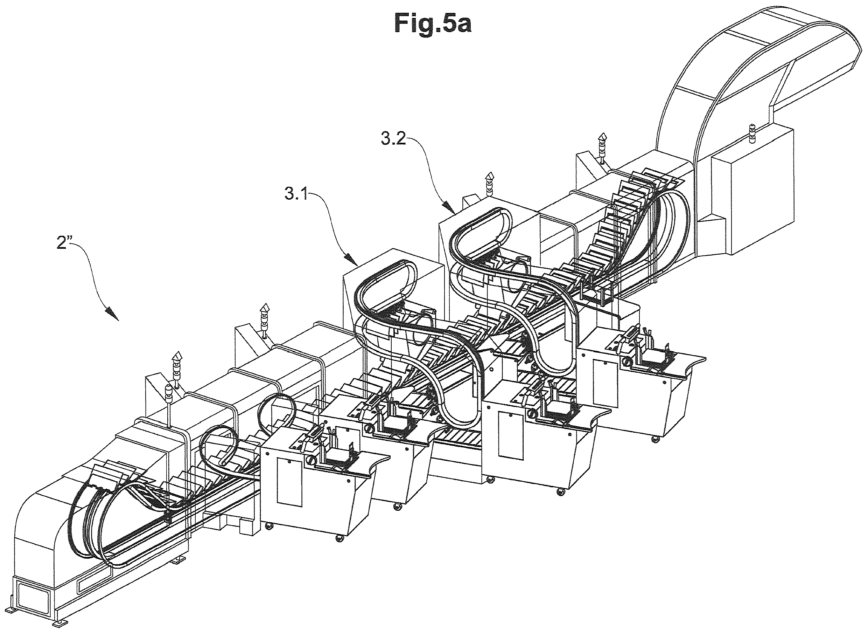

- Fig. 5a: in einer schematischen Ansicht ein weiteres Ausführungsbeispiel einer Sammelstrecke gemäss der Erfindung mit Zuführvorrichtungen von denen zwei als Zuführvorrichtungen mit jeweils einem Bereitstellungsföderer, einem Bereitschaftsrundlauf und einem Sammelförderer ausgebildet sind;

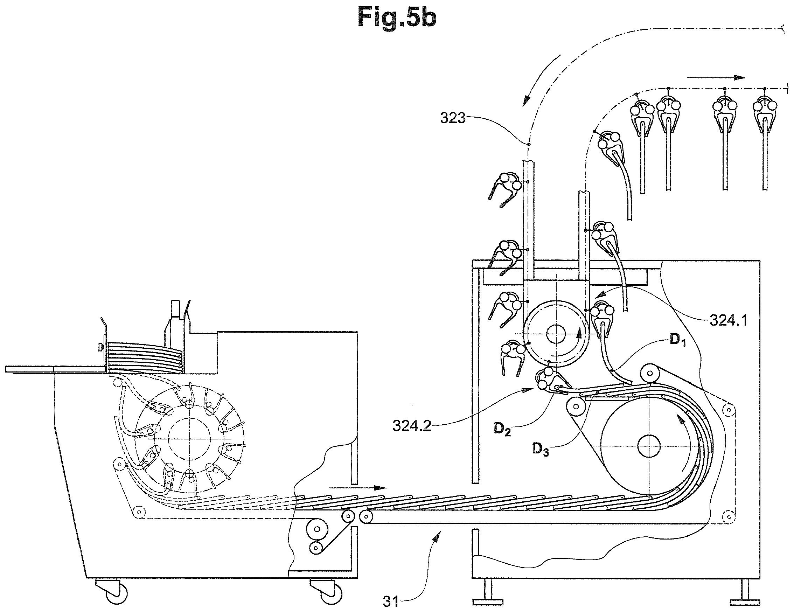

- Fig. 5b: in einer perspektivischen Ausschnittsvergrösserung die Abgabe eines Druckprodukts in einer Abgabestelle des Bereitstellungsförderers an eine Transporteinheit eines Bereitschaftsrundlaufs gemäss Figur 5a; und

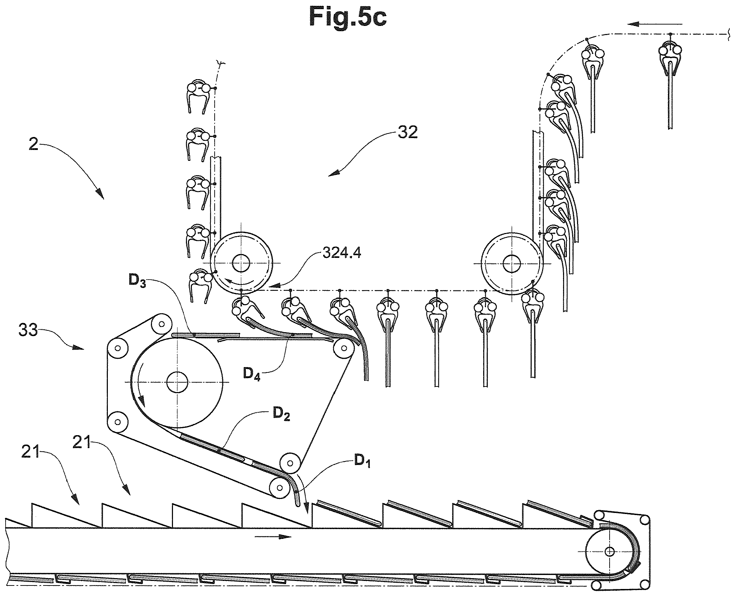

- Fig. 5c: in einer perspektivischen Ausschnittsvergrösserung einen Abgabeförderer einer Zuführvorrichtung gemäss der Figur 5a, wobei die Übergabe von Druckprodukten von einer Transporteinheit des Bereitschaftsrundlaufs an den Abgabeförderer und die Abgabe von Druckprodukten an Aufnahmeeinheiten der Sammelstrecke dargestellt sind.

### WEGE ZUR AUSFÜHRUNG DER ERFINDUNG

In der **Fig. 1** ist ein erstes Ausführungsbeispiel einer Druckweiterverarbeitungsanlage gemäss der Erfindung in einer schematischen Draufsicht gezeigt. In einer Sammelstrecke 2 mit fünf Zuführvorrichtungen 3.1-3.5 werden Kollektionen von Druckprodukten D hergestellt. Die Zuführvorrichtungen 3.1-3.5 umfassen jeweils einen Bereitstellungsförderer 31.1, einen Bereitschaftsrundlauf 32.1 mit einer Mehrzahl von Transporteinheiten und einen Abgabeförderer, der in der Fig. 1 nicht dargestellt ist. Mit den fünf Zuführvorrichtungen 3.1-3.5 werden bis zu fünf verschiedene Typen von Druckprodukten an einen Sammelrundlauf mit einer Mehrzahl von Aufnahmeeinheiten 21 abgegeben.

Derart werden vorzugsweise adressatspezifisch zusammengestellte Kollektionen von Druckprodukten hergestellt, die nach Durchlaufen der Sammelstrecke im dargestellten Ausführungsbeispiel in einer Ummantelungsstation 8 mit einem vorzugsweise adressatspezifisch hergestellten Mantelprodukten, zum Beispiel digital gedruckten gefalzten Druckbogen, ummantelt werden.

Nach der Ummantelungsstation 8 werden die nun fertig gestellten in der korrekten Produktesequenz vorliegenden Produkteinheiten P von einem Zwischenförderer 4, vorzugsweise einem Greifertransporteur, übernommen, der die Produkteinheiten im dargestellten Beispiel wahlweise an eine der beiden Stapeleinheiten 5.1, 5.2 transportieren und abgeben kann. Der Transport und die Abgabe erfolgt gemäss einer vorgängig festgelegten Produktionsplanung, so dass alle Produkteinheiten in der korrekten Sequenz in das Korrekte Produkt ihrer Verteilroute kommen.

Details zu einem Abgabeförderer 33 gemäss einer bevorzugten Ausführungsform lassen sich der **Fig**. **5c** entnehmen. Der Abgabeförderer 33 ist als Bandförderer derart ausgebildet, dass er die Produkte D₁, D₂, D₃, D₄ einzeln von oben her an die vorgesehenen Aufnahmeeinheiten 21 der Sammelstrecke 2" abgibt. Die Druckprodukte D₁, D₂, D₃, D₄ werden von einzelnen Transporteinheiten 324.4 des Bereitschaftsrundlaufs auf einen oberseitig angeordneten Ablagebereich des Abgabeförderers abgelegt. Mittels nicht in der Figur dargestellter Steuermittel wird die Abgabe der Produkte D₁, D₂, D₃, D₄ aus dem Bereitschaftsrundlauf derart gesteuert, dass der Abgabeförderer kontinuierlich in der an die Fördergeschwindigkeit der Aufnahmeeinheiten angepassten Geschwindigkeit laufen kann. Wird für eine Aufnahmeeinheit kein Produkt benötigt, so kann bereits die Abgabe des Produkts aus dem Greifer der entsprechenden Transporteinheit unterbleiben. Im dargestellten Beispiel der Fig. 5c ist dies nach der Abgabe des Produkts D₂ passiert. Das nachfolgende Produkt D₃ wurde erst nach einer Pause von zwei Takten abgegeben, so dass im Produktestrom auf dem Abgabeförderer 33 eine Lücke von zwei Produkttakten entstanden ist. Nach Abgabe der Produkte D₁ und D₂ in zwei aufeinanderfolgende Aufnahmeeinheiten 21 werden die zwei nachfolgenden aufeinanderfolgende Aufnahmeeinheiten 21 nicht mit Produkten beliefert. Anschliessend werden wieder zwei Produkte D₃ und D₄ in die Aufnahmeeinheiten abgegeben.

Dass die Produkte D₁, D₂, D₃, D₄ in lückenloser Folge von den Transporteinheiten antransportiert und gesteuert abgegeben werden können wird dadurch sichergestellt, dass an einer Abgabestelle des Bereitstellungsförderers 31 jeweils ein Druckprodukt D₁, D₂, D₃ an jeweils eine Transporteinheit eines Bereitschaftsrundlaufs 32 übergeben wird, wie es in der **Fig. 5b** dargestellt ist. Im dargestellten Ausführungsbeispiel hat die auf dem Laufwagen 324.1 angeordnete Klammer ein Produkt D₁ gegriffen und wurde mit dem Laufwagen von nicht in der Figur dargestellten Mitteln in Förderrichtung von der Übernahmestelle weg in Richtung zum Abgabeförderer gefördert. Das vom Bereitstellungsförderer 31 als nächstes bereitgestellte Produkte D₂ kam mit Verzögerung zur Abgabestelle und kann nun von der wartenden Transporteinheit mit Laufwagen 324.2 übernommen werden. Die kurze Wartezeit wirkt sich dank des ungetakteten Fördersystems im Bereitschaftsrundlauf nicht negativ aus.

In der **Fig. 3** ist in einer schematischen Seitenansicht auf einen Abschnitt des Bereitschaftsrundlaufs gemäss Fig. 1 oder Fig. 5 angedeutet, dass durch die Wartezeit entstehende Abstände zwischen den einzelnen Transporteinheiten 321 dank der freien Beweglichkeit der Laufwagen 324.1 - 324.4 auf der Laufschiene 323 problemlos ausgeglichen, respektive verringert werden können. In der Abbildung gem. Fig. 3 laufen die Laufwagen 324.1 - 324.4 in Förderrichtung F auf der Laufschiene 323 von rechts nach links durch das Bild. Die an den Laufwagen angebrachten Greiferklammern sind alle geschlossen und halten alle ein Druckprodukt D₁ - D₄. Der vorlaufende Wagen 324.1 ist von nicht in der Figur dargestellten Verzögerungsmitteln abgebremst worden, so dass sich der Abstand zum nachfolgenden Laufwagen 324.2 deutlich verringert hat im Vergleich zu den nachlaufenden Wagen 324.3 und 324.4, die jeweils grössere Abstände untereinander aufweisen. Da die vier frei beweglichen Transporteinheiten in Form von Laufwagen 324.1 - 324.4 je einen ersten Typ von Druckprodukten D₁ - D₄ hängend transportieren verringert sich entsprechend auch der Abstand zwischen diesen Produkten Produkte D₁ - D₄. Auf diese Weise lässt sich sehr einfach sicherstellen, dass die Produkte in benötigter Anzahl und ohne Unterbruch oder Lücken an den Übergabeförderer und damit an die Aufnahmeeinheiten des Sammelrundlaufs abgegeben werden können.

In **Fig. 2** ist in einer schematischen Draufsicht ein zweites Ausführungsbeispiel einer Druckweiterverarbeitungsanlage gemäss der Erfindung dargestellt. In einer Sammelstrecke mit acht Zuführvorrichtungen 3.1' bis 3.8' werden Kollektionen von Druckprodukten hergestellt. Die Zuführvorrichtungen 3.1' bis 3.8' können konventionelle Anleger und/oder Zuführvorrichtungen vom vorgängig beschriebenen Typ mit einem Bereitschaftsrundlauf sein. Dem Sammelförderer 2 nachfolgend ist eine Ummantelungsstation 8 angeordnet, in der die Kollektionen ummantelt werden können. Nach dem Ummanteln übernimmt eine Übernahmeeinheit 4 eines Zwischenförderers die fertigen Produkteinheiten, die vorzugsweise als Druckendprodukte mit einer adressatspezifischen Produktkollektion und/oder einem adressatspezifischen Mantel vorliegen. Der Zwischenförderer umfasst eine Rangiervorrichtung 6, die im dargestellten Ausführungsbeispiel eine Durchführungsstrecke 621 und je drei links und drei rechtsseitig angeordnete Bereitstellungsstrecken 611 aufweist. Den sechs Bereitstellungsstrecken 611 ist eine Richtungsgruppe mit fünf Einlaufweichen, nämlich einer 3-Weg Weiche 62 und vier nachgeschalteten 2-Weg Weichen 622 vorgelagert. Über die Einlaufweichen 62, 622 können einlaufende Transporteinheiten in Form von Laufwagen gesteuert auf die Durchführungsstrecke oder auf eine der Bereitstellungsstrecken 611 verteilt werden.

Korrekt zusammengestellte Produkteinheiten in der korrekten Produktionssequenz werden vorzugsweise ohne Weichenbewegung auf der Durchführungsstrecke 612 durch die Rangiervorrichtung geführt und in den stromabwärts angeordneten zwei Stapeleinrichtungen zu sequenzrichtigen Paketen verarbeitet.

Kommt es bei der Herstellung der Produkteinheiten zu Fehlern, und müssen einzelne oder mehrere davon korrigiert oder nachproduziert werden, so können die korrekt hergestellten Produkteinheiten einer Gruppe in der Rangiervorrichtung 6 über die Einlaufweichen 62, 622 auf eine Bereitstellungsstrecke umgeleitet und dort zwischengespeichert werden.

Eine solche Reparaturgruppe wird üblicherweise eine Gruppe von Produkteinheiten umfassen, die für ein gemeinsames Paket vorgesehen sind.

Die korrigierte oder nachproduzierte Produkteinheit wird in der Rangiervorrichtung an die richtige Sequenzposition innerhalb ihrer Gruppe gebracht. Dazu wird sie vorzugsweise auf der Durchführungsstrecke durch die Rangiervorrichtung zu einer Einschleussweiche 63 geführt. Je nach ihrer Position im vordefinierten Paket werden die ihr vorangehenden Produkteinheiten der Reparaturgruppe aus der Bereitstellungsstrecke 611 über die Einschleussweichen 631, 63 auf eine Ausschleusstrecke 64 gebracht, dann wird die Weiche 63 auf die Durchführungsstrecke geschaltet und die korrigierte oder nachproduzierte Produkteinheit wird sequenzrichtig zugefügt. Anschliessend wird die Weiche 63 wieder auf die Bereitstellungsstrecke mit den restlichen Produkteinheiten der Reparaturgruppe geschaltet und diese werden sequenzrichtig der Gruppe für das gemeinsame Paket zugeführt.

Wenn die korrigierte oder nachproduzierte Produkteinheit gerade zwischen zwei Paketsequenzgruppen angefördert wird, dann gestaltet sich das Zusammenführen sehr einfach. Die Produkteinheiten der vorlaufenden Gruppe werden über die Einschleussweiche geführt und die nachfolgende Gruppe wird vorzugsweise in der Durchführungsstrecke abgebremst und zurückgehalten/aufgestaut, bis die korrigierte oder nachproduzierte Produkteinheit sequenzrichtig in ihre Gruppe eingefügt ist.

Für den Fall, dass die korrigierte oder nachproduzierte Produkteinheit inmitten einer Gruppe von Produkteinheiten für ein fremdes Paket angeliefert wird, werden diese zusammengehörigen Produkteinheiten in der Richtungsgruppe sequenzrichtig auf eine Bereitstellungsstrecke 611 umgeleitet, die korrigierte oder nachproduzierte Produkteinheit wird allein auf die Durchführungsstrecke geleitet und wie oben beschrieben sequenzrichtig mit ihrer Paketgruppe vereinigt. Anschliessend kann die zwischengespeicherte Gruppe aus der Bereitstellungsstrecke 611 den Stapeleinrichtungen zur Paketbildung zugeführt werden.

Falls die Produktion der korrigierten oder nachproduzierten Produkteinheiten sehr schnell erfolgt und falls die Grösse und Speicherkapazität der Rangiervorrichtung dies erlaubt, kann die Korrekturgruppe und alle nachfolgenden Paketgruppen bis zum Eintreffen der korrigierte oder nachproduzierte Produkteinheit auf den Bereitstellungsstrecken zwischengespeichert werden. In diesem Fall können die Produkteinheiten inklusive der korrigierten oder nachproduzierten Produkteinheit in der vollständig korrekten Produktionssequenz an die Stapelvorrichtungen abgegeben werden und es muss keinerlei manuelle Korrektur vorgenommen werden.

Falls die Produktion der korrigierten oder nachproduzierten Produkteinheiten nicht schnell genug erfolgt und/oder falls die Grösse und Speicherkapazität der Rangiervorrichtung nicht ausreicht die Korrekturgruppe und alle nachfolgenden Paketgruppen bis zum Eintreffen der korrigierte oder nachproduzierte Produkteinheit auf den Bereitstellungsstrecken zwischenzuspeichern, so ist dennoch die korrekte Sequenz der Produkteinheiten innerhalb aller Pakete sichergestellt. Das aus der korrigierten Sequenz von Produkteinheiten hergestellte Paket muss jedoch noch an die korrekte Position innerhalb der Sequenz von Paketen für die entsprechende Lieferroute gebracht werden.

In der **Fig. 4** ist in einer schematischen Seitenansicht dargestellt, wie wiederum die Abstände zwischen den frei beweglichen Transporteinheiten in Form von Laufwagen 324.5 - 324.8 variiert werden können. Die Greifer 322.5 - 322.8 halten jeweils eine komplette Produkteinheit P₅ - P₈. Während sich die Produkteinheiten P₅ und P₆ noch gering beabstandet, platzsparend auf der Laufschiene 323 einer Bereitstellungsstrecke befindet werden die Produkte P₇ und P₈ schon von nicht dargestellten Fördermitteln beschleunigt in Richtung einer ausserhalb des Bildausschnitts befindlichen Einschleussweiche gefördert. Die Förderung kann komplett unterstützt aktiv, oder bereichsweise auch schwerkraftgetrieben passiv erfolgen.

In der **Figur 5a** ist in schematischer Ansicht ein weiteres Ausführungsbeispiel einer Sammelstrecke 2" gemäss der Erfindung mit fünf Zuführvorrichtungen gezeigt, von denen drei als konventionelle Zuführfrderer und zwei als Zuführvorrichtungen 3.1 und 3.2 mit jeweils einem Bereitstellungsföderer, einem Bereitschaftsrundlauf und einem Abgabeförderer ausgebildet sind.

Dank ihrer tiefen Fehlerquote hat es sich als vorteilhaft erwiesen die neuen Zuführvorrichtungen umfassend jeweils einem Bereitstellungsföderer, einem Bereitschaftsrundlauf und einem Abgabeförderer auch bei bestehenden Sammelstrecken nachzurüsten. Sie werden dann vorzugsweise zum Zufördern von sehr schwierigen Druckprodukten, zum Beispiel von sehr dünnen Produkten, Produkten mit sehr schlechter Papierqualität oder sehr glatten oder schwer zu vereinzelnden Produkten eingesetzt.

## Patentansprüche

1. Verfahren zum Betrieb einer Druckweiterverarbeitungsanlage (1) zum Herstellen und Verarbeiten von Produkteinheiten, insbesondere von Druckendprodukten (P) mit Druckprodukt-Kollektionen umfassend eine Mehrzahl von Produkten, ausgewählt aus der Gruppe von Mantelprodukten und einer Mehrzahl von Teilprodukten und/oder Beilagen, zu routengerechten Stapeln oder Paketen, wobei zumindest ein Anteil der Druckendprodukte (P) adressat-spezifisch individualisierte Produkteinheiten sind, **dadurch gekennzeichnet, dass** das Verfahren folgende Schritte umfasst:
i) Sammeln von Druckprodukt-Kollektionen aus einer Mehrzahl von Druckprodukten (D) in Aufnahmeeinheiten (21) entlang einer Sammelstrecke (2), wobei Druckprodukte (D) von Zuführvorrichtungen (3) umfassend jeweils einen Bereitstellungsförderer (31), einen Bereitschaftsrundlauf (32) mit einer Mehrzahl von Transporteinheiten (321) und einen Abgabeförderer (33) den Aufnahmeeinheiten (21) zugeführt werden und wobei jeweils ein Druckprodukt (D) an einer Abgabestelle des Bereitstellungsförderers (31) an eine Transporteinheit (321) eines Bereitschaftsrundlaufs (32) übergeben, von dieser zum Abgabeförderer (33) transportiert und an diesen abgegeben wird, und anschliessend der Abgabeförderer (33) die Produkte (D) an die vorgesehene Aufnahmeeinheiten (21) der Sammelstrecke (2, 2") abgibt, wobei die Zuführvorrichtung die Druckprodukte gesteuert, also bei Bedarf, an die Sammelstrecke abgibt,
ii) Übergabe der Druckendprodukte (P) gemäss einer tatsächlichen Produktesequenz (Sᵢₛₜ) an mindestens eine Stapelvorrichtung (5.1, 5.2) zum Herstellen von Stapeln oder Paketen.

2. Verfahren zum Betrieb einer Druckweiterverarbeitungsanlage (1) gemäss Anspruch 1, wobei der Bereitschaftsrundlauf (32) die Druckprodukte gesteuert an den Abgabeföderer (33) abgibt.

3. Verfahren zum Betrieb einer Druckweiterverarbeitungsanlage (1) gemäss Anspruch 1 oder 2, wobei der Abgabeförderer (33) die Produkte (D) gesteuert an die vorgesehene Aufnahmeeinheiten (21) der Sammelstrecke (2) abgibt.

4. Verfahren zum Betrieb einer Druckweiterverarbeitungsanlage (1) gemäss einem der Ansprüche 1 bis 3, wobei eine Kontrolleinheit kontrolliert, dass die Transporteinheiten (321) des Bereitschaftsrundlaufs (32) die Abgabestelle nur verlassen, wenn sie ein Produkt (D) übernommen haben .

5. Druckweiterverarbeitungsanlage (1) zum Herstellen und Verarbeiten von Produkteinheiten (P), insbesondere von Druckendprodukten (P) mit Druckprodukt-Kollektionen umfassend eine Mehrzahl von Produkten (D), ausgewählt aus der Gruppe von Mantelprodukten und einer Mehrzahl von Teilprodukten und/oder Beilagen, in mindestens einer Stapelvorrichtung (5.1, 5.2) zu routengerechten Stapeln oder Paketen, wobei zumindest ein Anteil der Druckendprodukte (P) adressat-spezifisch individualisierte Produkteinheiten sind, **dadurch gekennzeichnet, dass** die Druckweiterverarbeitungsanlage (1) eine Sammelstrecke (2, 2") umfasst, mit einer Mehrzahl von Zuführvorrichtungen (3) jeweils umfassend einen Bereitstellungsförderer (31), einen Bereitschaftsrundlauf (32) mit einer Mehrzahl von Transporteinheiten (321) und einen Abgabeförderer (33) sowie einen Sammelrundlauf mit einer Mehrzahl von Aufnahmeeinheiten (21) wobei die Zuführvorrichtungen derart ausgebildet sind, dass sie die Produkte (D) an die vorgesehenen Aufnahmeeinheiten (21) der Sammelstrecke (2, 2") gesteuert, also bei Bedarf, abgeben.

6. Druckweiterverarbeitungsanlage (1) gemäss Anspruch 5, wobei der Bereitschaftsrundlauf (32) zur gesteuerten Abgabe der Druckprodukte (D) an den Abgabeföderer (33) und/oder der Abgabeförderer (33) zur gesteuerten Abgabe der Druckprodukte (D) an die vorgesehene Aufnahmeeinheiten (21) der Sammelstrecke (2, 2") ausgebildet ist.

7. Druckweiterverarbeitungsanlage (1) gemäss Anspruch 5 oder 6, wobei eine Kontrolleinheit vorgesehen ist, die kontrolliert, dass die Transporteinheiten (321) des Bereitschaftsrundlaufs (32) die Abgabestelle nur verlassen, wenn sie ein Produkt (D) übernommen haben .

8. Druckweiterverarbeitungsanlage (1) gemäss einem der Ansprüche 5 bis 7, wobei die Transporteinheiten (321) des Bereitschaftsrundlaufs (32) Greifer (322) zum Greifen und lösbaren Halten der Produkte (D) umfassen.

9. Druckweiterverarbeitungsanlage (1) gemäss einem der Ansprüche 5 bis 8, wobei die Transporteinheiten (321) auf dem Bereitschaftsrundlauf (32) unabhängig voneinander und im Abstand zueinander veränderlich förderbar angeordnet sind.

10. Druckweiterverarbeitungsanlage (1) gemäss einem der Ansprüche 5 bis 9, wobei die Transporteinheiten (321) als in einer Laufschiene (323) frei bewegliche Laufwagen (324) mit Greifern (322) ausgebildet sind.

11. Verfahren zum Betrieb einer Druckweiterverarbeitungsanlage (1') zum Herstellen und Verarbeiten von Produkteinheiten, insbesondere von Druckendprodukten (P) mit Druckprodukt-Kollektionen umfassend eine Mehrzahl von Produkten, ausgewählt aus der Gruppe von Mantelprodukten und einer Mehrzahl von Teilprodukten und/oder Beilagen, zu routengerechten Stapeln oder Paketen (S), wobei zumindest ein Anteil der Druckendprodukte (P) adressat-spezifisch individualisierte Produkteinheiten sind, **dadurch gekennzeichnet, dass** das Verfahren folgende Schritte umfasst:
i) Sammeln von Produktkollektionen aus einer Mehrzahl von Druckprodukten (D) in Aufnahmeeinheiten (21) einer Sammelstrecke (2', 2"), wobei Druckprodukte (D) von Zuführvorrichtungen (3) den Aufnahmeeinheiten zugeführt werden
ii) Fertigstellen der Produkteinheiten (P) umfassend die Produktkollektionen
iii) Übergabe der Produkteinheiten (P) gemäss einer Produktesequenz (Sᵢₛₜ) an eine Rangiervorrichtung (6)
iv) Vergleich der tatsächlichen Sequenz der einzelnen Produkteinheiten der Produktesequenz (Sᵢₛₜ) mit der geplanten Sequenz von Produkteinheiten gemäss einer Produktionssequenz (Sₛₒₗₗ)
v-a) Transport der Produkteinheiten (P) ohne Änderung der Sequenz durch die Rangiervorrichtung bei Übereinstimmung der Produktesequenz (Sᵢₛₜ) mit der Produktionssequenz (Sₛₒₗₗ), oder
v-b) Zwischenspeichern einer Reparaturgruppe (R) umfassend eine Mehrzahl von Produkteinheiten (P) mit von der Produktionssequenz (Sₛₒₗₗ) abweichender Sequenz in einer Bereitstellungsstrecke (611) einer Richtungsgruppe und nachfolgendem sequenzrichtigem Zusammenführen von korrigierten und/oder nachproduzierten Produkteinheiten mit den Produkteinheiten der Reparaturgruppe und
vi) Transport der sequenzrichtigen Produkteinheiten (P) an mindestens eine Stapelvorrichtung (5.1, 5.2) zum Herstellen routengerechter Pakete.

12. Druckweiterverarbeitungsanlage (1') zum Herstellen und Verarbeiten von Produkteinheiten (P), insbesondere von Druckendprodukten (P) mit Druckprodukt-Kollektionen umfassend eine Mehrzahl von Produkten (D), ausgewählt aus der Gruppe von Mantelprodukten (A) und einer Mehrzahl von Teilprodukten und/oder Beilagen, in mindestens einer Stapelvorrichtung (5.1, 5.2) zu routengerechten Stapeln oder Paketen, wobei zumindest ein Anteil der Druckendprodukte (P) adressat-spezifisch individualisierte Produkteinheiten sind, umfassend eine Sammelstrecke (2', 2"), mit einer Mehrzahl von Zuführvorrichtungen (3) und einem Sammelrundlauf mit einer Vielzahl von Aufnahmeeinheiten (21) zum Herstellen von Druckproduktkollektionen, mindestens einen Zwischenförderer (4) zum Transportieren der Druckproduktkollektionen von der Sammelstrecke (2) zur mindestens einen Stapeleinrichtung (5.1, 5.2), wobei der Zwischenförderer (4) eine Vielzahl von Transporteinheiten (321) zum Greifen und lösbaren Halten der Produkte (D), **dadurch gekennzeichnet, dass** der Zwischenförderer (4) eine Rangiervorrichtung (6) umfasst.

13. Druckweiterverarbeitungsanlage (1') gemäss Anspruch 12, wobei die Rangiervorrichtung (6) mindestens eine Richtungsgruppe mit mindestens einer Weiche (62) und mindestens eine Bereitstellungsstrecke (611) umfasst.

14. Druckweiterverarbeitungsanlage (1') gemäss Anspruch 13, wobei die Transporteinheiten (321) des Zwischenförderers (4) unabhängig voneinander und im Abstand zueinander veränderlich förderbar angeordnet und vorzugsweise als in einer Laufschiene (323) frei bewegliche Laufwagen (324) mit Greifern (322) ausgebildet sind.

15. Druckweiterverarbeitungsanlage (1') gemäss Anspruch 14, wobei mittels einer oder mehrerer Weichen (62, 622) ein Laufwagen (324) in der Richtungsgruppe auf jeweils eine aus einer Mehrzahl von Bereitstellungsstrecken (611) einspeicherbar ist.

16. Druckweiterverarbeitungsanlage (1') gemäss Anspruch 15, wobei ein Laufwagen (324) in der Richtungsgruppe aktiv oder passiv aus der jeweils einen von einer Mehrzahl von Bereitstellungsstrecken (611) ausspeicherbar und mittels einer oder mehrerer Weichen (63, 631) mit weiteren Laufwagen (324) aus der selben oder weiteren Bereitstellungsstrecken (611) zu einer vorgegebenen Sequenz zusammenstellbar ist.

## Claims

1. Method of operating a print further processing installation (1) for the production and processing of product units, in particular print end products (P) with print product collections comprising a plurality of products, selected from the group of jacket products and a plurality of part products and/or appendices, into route-adapted stacks or packages, wherein at least a part of the print end products (P) are addressee-specific individualised product units,
**characterised in that** the method comprises the following steps:
i) collection of print product collections of a plurality of print products (D) in receiving units along a collection path (2) wherein print products (D) are supplied to the receiving units (21) from supply devices (3) each comprising a supplying conveyor (31), a stand-by loop (32) with a plurality of transporting units (321) and a discharge conveyor (33) and wherein in each case a printing product (D) is transferred at a discharge point of the supplying conveyor (31) to a transporting unit (321) of a stand-by loop (32), transported by this to the discharge conveyor (33) and transferred thereto and subsequently the discharge conveyor (33) discharges the products (D) to the envisaged receiving unit (21) of the collection path (2, 2") wherein the supply device discharges the print product in a controlled manner, i.e. as required, to the collection path.
ii) transfer of the print end products (P) in accordance with an actual product sequence (S_{actual}) to at least one stacking device (5.1.5.2) to produce stacks or packages.

2. Method of operating a print further processing installation (1) according to claim 1, wherein the stand-by loop (32) discharges the print products in a controlled manner to the discharge conveyor (33).

3. Method of operating a print further processing installation (1) according to claim 1 or 2, wherein the discharge conveyor (33) discharges the products (D) in a controlled manner to the envisaged receiving units (21) of the collection path (2).

4. Method of operating a print further processing installation (1) according to any one of claims 1 to 3, wherein a control unit checks that the transporting units (321) of the stand-by loop (32) only leave the discharge point when they have taken over a product (D) .

5. Print further processing installation (1) for producing and processing product units (P), in particular print end products (P) with print product collections comprising a plurality of products (D), selected from the group of jacket products and a plurality of part products and/or appendices, in at least on stacking device (5.1, 5.2) into route-adapted stacks or packages, wherein at least a part of the print end products (P) are addressee-specific individualised product units,
**characterised in that** the print further processing installation comprises a collection path (2, 2") with a plurality of supply devices (3) each comprising a supplying conveyor (31), a stand-by loop (32) with a plurality of transport units (321) and a discharge conveyor (33) as well as a collecting loop with a plurality of receiving units (21), wherein the supply devices are designed in such a way that they transfer the products (D) to the envisaged receiving units (21) of the collection path (2. 2") in a controlled manner, i.e. as required.

6. Print further processing installation (1) according to claim 5, wherein the stand-by loop (32) is designed for the controlled discharge of the print product (D) to the discharge conveyor (33) and/or the discharge conveyor (33) is designed for the controlled discharge of the print products (D) to the envisaged receiving units (21) of the collection path (2, 2").

7. Print further processing installation (1) according to claim 5 or 6, wherein a control unit is provided which checks that the transporting units (321) of the stand-by loop (32) only leave the discharge point when they have taken over a product (D).

8. Print further processing installation (1) according to any one of claims 5 to 7, wherein the transporting units (321) of the stand-by loop (32) comprise grippers (322) for gripping and detachably holding the products (D).

9. Print further processing installation (1) according to any one of claims 5 to 8, wherein the transporting units (321) on the stand-by loop (32) are arranged independently (from one another) and conveyable with a variable distance from one another.

10. Print further processing installation (1) according to any one of claims 5 to 9, wherein the transporting units (321) are designed as carriages (324) with grippers (322), being freely movable in a running rail (323) .

11. Method of operating a print further processing installation (1') for the production and processing of product units, in particular print end products (P) with print product collections comprising a plurality of products, selected from the group of jacket products and a plurality of part products and/or appendices, into route-adapted stacks or packages, wherein at least a part of the print end products (P) are addressee-specific individualised product units, **characterised in that** the method comprises the following steps:
i) collection of product collections from a plurality of print products (D) in receiving units (21) of a collection path (2', 2"), wherein print products are supplied from supply devices (3) to the receiving units,
ii) finishing of the product units (P) comprising the product collections,
iii) transfer of the product units (P) to a shunting device (6) in accordance with a product sequence (S_{actual}),
iv) comparison of the actual sequence of the individual products units of the product sequence (S_{actual}) with the planned sequence of product units according to a production sequence (Sₙₒₘᵢₙₐₗ)
v-a) transporting of the product units (P) without changing the sequence through the shunting device if the product sequence (S_{actual}) matches the production sequence (Sₙₒₘᵢₙₐₗ) or
v-b) temporary storage of a repair group (R) comprising a plurality of product units (P) with a sequence deviating from the production sequence (S_{actual}) in a supply path (611) of a direction group and subsequent sequence-correct combining of corrected and/or subsequently produced product units with the product units of the repair group and
vi) transporting of the sequence-correct product units (P) to a least one stacking device (5.1., 5.2) to produce route-adapted packages.

12. Print further processing installation (1') ) for the production and processing of product units, in particular print end products (P) with print product collections comprising a plurality of products (D), selected from the group of jacket products (A) and a plurality of part products and/or appendices, in at least one stacking device (5.1, 5.2) into route-adapted stacks or packages, wherein at least one part of the print end products (P) are addressee-specific individualised product units, comprising a collection path (2', 2") with a plurality of supply devices (3) and a collecting loop with a plurality of receiving units (21) for producing print product collections, at least one intermediate conveyor (2) for transporting the print product collections from the collection path (2) to at least one stacking device (5.1., 5.2) wherein the intermediate conveyor (4) comprises has a plurality of transporting units (321) for gripping and detachably holding the products (D), **characterised in that** the intermediate conveyor (4) comprises a shunting device (6).

13. Print further processing installation (1') according to claim 12, wherein the shunting device (6) comprises at least one direction group with at least one gate (62) and at least one supply path (611).

14. Print further processing installation (1') according to claim 13, wherein the transporting units (321) of the intermediate conveyor (4) are arranged independently (from one another) and conveyable with a variable distance from one another and preferably as carriages with grippers (322), being freely movable in a running rail (323).

15. Print further processing installation (1') according to claim 14, wherein by means of one or more gates (62, 622) a carriage (324) can be stored in the direction group on one of a plurality of supply paths (611) .

16. Print further processing installation (1') according to claim 15, wherein a carriage (324) in the direction group can be actively or passively removed from one of a plurality of supply paths (611) and by means of one or more gates (63, 631) combined with several carriages (324) from the same or other supply paths (611) in a predetermined sequence.

## Revendications

1. Procédé pour faire fonctionner une installation de traitement ultérieur d'impression (1) pour la fabrication et le traitement d'unités de produits, en particulier de produits finis d'impression (P) avec des collections de produits d'impression comprenant une pluralité de produits, sélectionnés à partir du groupe de produits d'enveloppe et d'une pluralité de suppléments et/ou d'encarts, pour l'empilage et la mise en paquets conformes au routage, au moins une part des produits finis d'impression (P) étant des unités de produits individualisées spécifiquement en fonction du destinataire, **caractérisé en ce que** le procédé comprend les étapes suivantes :
i) assemblage de collections de produits d'impression provenant d'une pluralité de produits d'impression (D) en unités de réception (21) le long d'une section d'assemblage (2), les produits d'impression (D) étant acheminés aux unités de réception (21) depuis les dispositifs d'alimentation (3) comprenant respectivement un transporteur de préparation (31), un circuit de disponibilité (32) avec une pluralité d'unités de transport (321) et un transporteur de distribution (33), et un produit d'impression (D) à un poste de distribution du transporteur de préparation (31) transféré sur une unité de transport (321) d'un circuit de disponibilité (32) étant transporté de celle-ci vers le transporteur de distribution (33) et distribué sur celui-ci et ensuit le transporteur de distribution (33) distribuant les produits (D) aux unités de réception (21) prévues de la section d'assemblage (2,2"), le dispositif d'alimentation distribuant les produits d'impression de façon pilotée , donc en cas de besoin, à la section d'assemblage,
ii) transfert des produits finis d'impression (P) selon une séquence de produits (S_{eff}) effective à au moins un dispositif d'empilage (5.1,5,2) pour fabriquer des piles ou des paquets.

2. Procédé pour faire fonctionner une installation de traitement ultérieur d'impression (1) selon la revendication 1, le circuit de disponibilité (32) distribuant de façon pilotée les produits d'impression sur le transporteur de distribution (33).

3. Procédé pour faire fonctionner une installation de traitement ultérieur d'impression (1) selon la revendication 1 ou 2, le transporteur de distribution (33) distribuant de façon pilotée les produits (D) aux unités de réception (21) prévues de la section d'assemblage (2).

4. Procédé pour faire fonctionner une installation de traitement ultérieur d'impression (1) selon l'une quelconque des revendications 1 à 3, une unité de contrôle contrôlant que les unités de transport (321) du circuit de disponibilité (32) ne quittent le poste de distribution que si elles ont pris en charge un produit (D).

5. Installation de traitement ultérieur d'impression (1) pour la fabrication et le traitement d'unités de produits (P), en particulier de produits finis d'impression (P) avec des collections de produits d'impression comprenant une pluralité de produits (D), sélectionnées à partir du groupe de produits d'enveloppe et d'une pluralité de suppléments et/ou d'encarts, dans au moins un dispositif d'empilage (5.1, 5.2) pour l'empilage et la mise en paquets conformes au routage , au moins une part des produits finis d'impression (P) étant des unités de produits individualisés spécifiquement en fonction du destinataire, **caractérisée en ce que** l'installation de traitement ultérieur d'impression (1) comprend une section d'assemblage (2,2"), avec une pluralité de dispositifs d'alimentation (3) comprenant respectivement un transporteur de préparation (31), un circuit de disponibilité (32) avec une pluralité d'unités de transport (321) et un transporteur de distribution (33) ainsi qu'un circuit d'assemblage avec une pluralité d'unités de réception (33), les dispositifs d'alimentation étant constitués de telle sorte qu'ils distribuent de façon pilotée les produits (D), donc en cas de besoin, aux unités de réception (21) prévues de la section d'assemblage (2,2").

6. Installation de traitement ultérieur d'impression (1) selon la revendication 5, le circuit de disponibilité (32) étant constitué pour la distribution pilotée des produits d'impression (D) au transporteur de distribution (33) et/ou le transporteur de distribution (33) étant constitué pour la distribution pilotée des produits d'impression (D) aux unités de réceptions prévues (21) de la section d'assemblage (2,2").

7. Installation de traitement ultérieur d'impression (1) selon la revendication 5 ou 6, une unité de contrôle étant prévue, qui contrôle que les unités de transport (321) du circuit de disponibilité (32) ne quittent le poste de distribution que si elles ont pris en charge un produit (D).

8. Installation de traitement ultérieur d'impression (1) selon l'une quelconque des revendications 5 à 7, les unités de transport (321) du circuit de disponibilité (32) comprennent des préhenseurs (322) pour la saisie et le maintien amovible des produits (D).

9. Installation de traitement ultérieur d'impression (1) selon l'une quelconque des revendications 5 à 8, les unités de transport (321) étant disposées sur le circuit de disponibilité (32) indépendamment les unes des autres et transportables de manière différente à distance les uns par rapport aux autres.

10. Installation de traitement ultérieur d'impression (1) selon l'une quelconque des revendications 5 à 9, les unités de transport (321) étant constituées comme un chariot (324) avec des préhenseurs (322), librement mobile dans un rail de roulement (323).

11. Procédé pour faire fonctionner une installation de traitement ultérieur d'impression (1') pour la fabrication et le traitement d'unités de produits, en particulier de produits finis d'impression (P) avec des collections de produits d'impression comprenant une pluralité de produits, sélectionnés à partir du groupe de produits d'enveloppe et d'une pluralité de suppléments et/ou d'encarts, pour l'empilage et la mise en paquets (S) conformes au routage, au moins une part des produits finis d'impression (P) étant des unités de produits individualisées spécifiquement en fonction du destinataire, **caractérisé en ce que** le procédé comprend les étapes suivantes :
i) assemblage de collections de produits provenant d'une pluralité de produits d'impression (D) dans des unités de réception (21) d'une section d'assemblage (2',2"), les produits d'impression (D) étant acheminés aux unités de réception depuis les dispositifs d'alimentation (3),
ii) finition des unités de produits (P) comprenant les collections de produits,
iii) transfert des unités de produits (P) selon une séquence de produits (S_{eff}) à un dispositif de triage (6),
iv) comparaison de la séquence effective des unités de produits individuelles de la séquence de produits (S_{eff}) avec la séquence programmée d'unités de produits selon une séquence de production (S_{théo}),
v-a) transport des unités de produits (P) sans modification de la séquence par le dispositif de triage en cas de concordance de la séquence de produits (S_{eff}) avec la séquence de production (S_{théo}), ou
v-b) emmagasinage intermédiaire d'un groupe de réparation (R) comprenant une pluralité d'unités de produits (P) avec séquence differante de la séquence de production (S_{théo}) dans une section de préparation (611) d'un groupe directionnel et regroupement ultérieur répondant à la séquence des unités de produits corrigées et/ou produites ultérieurement avec les unités de produits du groupe de réparation, et
vi) transport des unités de produits (P) répondant à la séquence sur au moins un dispositif d'empilage (5.1,5.2) pour fabriquer
des paquets conformes au routage.

12. Installation de traitement ultérieur d'impression (1') pour la fabrication et le traitement d'unités de produits (P), en particulier de produits finis d'impression (P) avec collections de produits d'impression comprenant une pluralité de produits (D), sélectionnés à partir du groupe de produits d'enveloppe (A) et d'une pluralité de suppléments et/ou d'encarts, dans au moins un dispositif d'empilage (5.1,5.2) pour l'empilage et la mise en paquets conformes au routage, au moins une part des produits finis d'impression (P) étant des unités de produits individualisées spécifiquement en fonction du destinataire, comprenant une section d'assemblage (2',2") avec une pluralité de dispositifs d'alimentation (3) et un circuit d'assemblage avec une pluralité d'unités de réception (21) pour la fabrication de collections de produits d'impression, au moins un transporteur intermédiaire (4) pour transporter des collections de produits d'impression de la section d'assemblage (2) à au moins un dispositif d'empilage (5.1,5.2), le transporteur intermédiaire (4) comprenant une pluralité d'unités de transport (321) pour la préhension et le maintien amovible des produits (D), **caractérisée en ce que** le transporteur intermédiaire (4) comprend un dispositif de triage (6).

13. Installation de traitement ultérieur d'impression (1') selon la revendication 12, le dispositif de triage (6) comprenant au moins un groupe directionnel avec au moins un aiguillage (62) et au moins une section de préparation (611).

14. Installation de traitement ultérieur d'impression (1') selon la revendication 13, les unités de transport (321) du transporteur intermédiaire (4) étant disposées indépendamment les unes des autres et transportables de façon différente à distance les unes des autres et constituées de préférence comme des chariots (324) avec des préhenseurs (322),librement mobiles dans un rail de roulement (323).

15. Installation de traitement ultérieur d'impression (1') selon la revendication 14, un chariot (324) pouvant être emmagasiné au moyen d'un ou plusieurs aiguillages (62,622) dans le groupe directionnel sur une section de préparation (611) prise respectivement à partir d'une pluralité de sections.

16. Installation de traitement ultérieur d'impression (1') selon la revendication 15, un chariot (324) dans le groupe directionnel pouvant être retiré respectivement de façon active ou passive d'une section de préparation (611) d'une pluralité et pouvant être recomposé en une séquence prédéfinie avec d'autres chariots (324) à partir des mêmes ou d'autres sections de préparation (611) au moyen d'un ou plusieurs aiguillages (63,631).
